(19) Europäisches Patentamt
European Patent Office
Office européen des brevets

(11) Veröffentlichungsnummer: **0 122 881**
**B1**

(12) # EUROPÄISCHE PATENTSCHRIFT

(45) Veröffentlichungstag der Patentschrift: **13.08.86**

(51) Int. Cl.⁴: **C 09 B 62/085,** D 06 P 3/66

(21) Anmeldenummer: **84810174.7**

(22) Anmeldetag: **09.04.84**

(54) **Reaktivfarbstoffe, deren Herstellung und Verwendung.**

(30) Priorität: **15.04.83 CH 2039/83**

(43) Veröffentlichungstag der Anmeldung: **24.10.84 Patentblatt 84/43**

(45) Bekanntmachung des Hinweises auf die Patenterteilung: **13.08.86 Patentblatt 86/33**

(84) Benannte Vertragsstaaten: **CH DE FR GB IT LI**

(56) Entgegenhaltungen:
**DE-A-2 731 617**
**FR-A-1 182 529**
**FR-A-2 407 965**

(73) Patentinhaber: **CIBA- GEIGY AG, Klybeckstrasse 141, CH- 4002 Basel (CH)**

(72) Erfinder: **Seiler, Herbert, Dr., Leimgrubenweg 60, CH- 4125 Riehen (CH)**

**EP 0 122 881 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue Reaktivfarbstoffe, Verfahren zu ihrer Herstellung und ihre Verwendung zum Färben und Bedrucken von Fasermaterialien.

Gegenstand der Erfindung sind Reaktivfarbstoffe der Formel

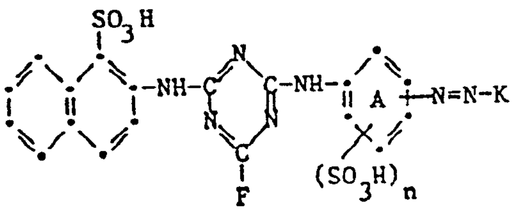 (1),

worin K der Rest einer Naphtholsulfonsäure oder N-acylierten Aminonaphtholsulfonsäure und n = 1 oder 2 ist, und der Benzolring A gegebenenfalls weitersubstituiert ist.

Bevorzugt sind Reaktivfarbstoffe der Formel (1), worin K der Rest einer Hydroxynaphthalindisulfonsäure oder N-acylierten Aminohydroxynaphthalin- mono- oder -disulfonsäure ist.

Bevorzugt sind insbesondere Reaktivfarbstoffe der Formel (1), worin K der Rest einer N-acylierten 1-Amino-8-hydroxynaphthalin-3,6- oder -4,6-disulfonsäure ist.

Als weitere Substituenten am Benzolring A kommen vor allem $C_{1-4}$-Alkyl, $C_{1-4}$-Alkoxy, Halogen und Carboxy in Betracht; insbesondere sind dies Methyl, Aethyl, Methoxy, Äethoxy, Chlor und Carboxy.

Bevorzugt sind weiterhin Reaktivfarbstoffe der Formel (1), worin n = 1 ist, und der Benzolring A nicht weitersubstituiert ist.

Eine wichtige Ausführungsform der Erfindung ist der Reaktivfarbstoff der Formel

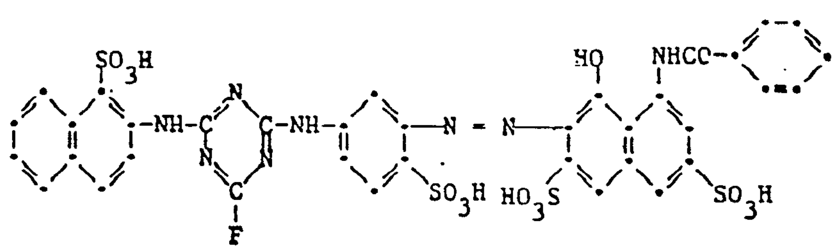 (2).

Gegenstand der Erfindung ist ferner ein Verfahren zur Herstellung von Reaktivfarbstoffen der Formel (1), das darin besteht, dass man 2-Naphthylamin-1-sulfonsäure, 2,4,6-Trifluor-s-triazin, eine Phenylendiaminsulfonsäure und eine Kupplungskomponente der Naphtholsulfonsäure- oder N-acylierten Aminonaphtholsulfonsäure-Reihe in geigneter Reihenfolge diazotiert, kuppelt und kondensiert.

Gegebenenfalls verwendet man statt einer Phenylendiaminsulfonsäure die entsprechende Aminoacetylaminoverbindung und spaltet den Acetylrest nach der Diazotierung und Kupplung durch Verseifen wieder ab.

Da die einzelnen oben angegebenen Verfahrensschritte in unterschiedlicher Reihenfolge ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionsschritte zwischen den betreffenden Reaktionskomponenten frei gewählt werden kann. Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:

1. 2,4,6-Trifluor-2-triazin mit 2-Naphthylamin-1-sulfonsäure kondensiert, das Monokondensationsprodukt mit einer Phenylendiaminsulfonsäure kondensiert, das erhaltene sekundäre Kondensationsprodukt diazotiert und auf eine Kupplungskomponente kuppelt;

2. eine Phenylendiaminsulfonsäure bzw. eine entsprechende Aminoacetylaminoverbindung diazotiert und auf eine Kupplungskomponente kuppelt, und gegebenenfalls den Acetylrest durch Verseifung abspaltet, die Azoverbindung mit 2,4,6-Trifluor-s-triazin kondensiert und das erhaltene Monokondensationsprodukt mit 2-Naphthylamin-1-sulfonsäure kondensiert;

3. eine Phenylendiaminsulfonsäure mit 2,4,6-Trifluor-s-triazin kondensiert, das primäre Kondensationsprodukt mit 2-Naphthylamin-1-sulfonsäure kondensiert, das entstandene sekundäre Kondensationsprodukt diazotiert und auf eine Kupplungskomponente kuppelt;

4. eine Phenylendiaminsulfonsäure bzw. eine entsprechende Aminoacetylaminoverbindung diazotiert und auf eine Kupplungskomponente kuppelt, und gegebenenfalls den Acetylrest durch Verseifung abspaltet, ferner 2,4,6-Trifluor-s-triazin und 2-Naphthylamin-1-sulfonsäure kondensiert, und beide Zwischenprodukte miteinander kondensiert;

5. 2,4,6-Trifluor-s-triazin mit einer Phenylendiaminsulfonsäure kondensiert, das erhaltene primäre Kondensationsprodukt diazotiert und auf eine Kupplungskomponente kuppelt, und zuletzt ein Fluoratom im s-Triazinrest durch Kondensation mit 2-Naphthylamin-1-sulfonsäure durch den entsprechenden Rest ersetzt.

Eine bevorzugte Ausführungsform des Verfahrens zur Herstellung von Reaktivfarbstoffen der Formel (1) ist dadurch gekennzeichnet, dass man die Kondensationen und gegebenenfalls die Kupplung in Gegenwart von mindestens der äquimolaren Menge einer basischen Lithiumverbindung durchführt.

Als basische Lithiumverbindungen werden vorzugsweise Lithiumcarbonat, Lithiumhydrogencarbonat oder Lithiumhydroxid verwendet.

Somit werden die Kondensations- bzw. Kupplungsschritte in den oben angegebenen Verfahrensvarianten 1. bis 5. vorzugsweise in Gegenwart basischer Lithiumverbindungen durchgeführt.

Die bevorzugte Herstellungsweise des Reaktivfarbstoffes der Formel (2) ist dadurch gekennzeichnet, dass man 2-Naphthylamin-1-sulfonsäure in Gegenwart von Lithiumhydroxid mit 2,4,6-Trifluor-s-triazin kondensiert, das Kondensationsprodukt in Gegenwart von Lithiumhydroxid mit 1,3-Diaminobenzol-4-sulfonsäure kondensiert, das erhaltene sekundäre Kondensationsprodukt diazotiert und in Gegenwart von Lithiumhydroxid oder Natriumhydroxid mit 1-Benzoylamino-8-hydroxynaphthalin-3,6-disulfonsäure kuppelt.

Als Ausgangsstoffe, die zur Herstellung der Reaktivfarbstoffe der Formel (1) verwendet werden können, seien genannt:

a) 2-Naphthylamin-1-sulfonsäure;

b) 2,4,6-Trifluor-s-triazin (Cyanurfluorid);

c) Phenylendiaminsulfonsäuren:

1-Amino-3-acetylaminobenzol-4-sulfonsäure (nachträglich verseift), 1-Amino-3-acetylaminobenzol-6-sulfonsäure (nachträglich verseift), 1-Amino-3-acetylamino-4-methylbenzol-6-sulfonsäure (nachträglich verseift), 1-Amino-4-acetylaminobenzol-2-sulfonsäure (nachträglich verseift), 1-Amino-3-acetylamino-6-methylbenzol-4-sulfonsäure (nachträglich verseift), 1-Amino-3-acetylamino-6-methoxybenzol-4-sulfonsäure (nachträglich verseift), 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diamino-6-chlorbenzol-2-sulfonsäure;

d) Kupplungskomponenten:

2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Acetylamino-8-hydroxynaphthalin-6-sulfonsäure, 1-Acetylamino-8-hydroxynaphthalin-2,4-disulfonsäure, 1-Benzoylamino-8-hydroxynaphthalin-3,6- oder -4,6-disulfonsäure, 2-Benzoylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Acetylamino-5-hydroxynaphthalin-1,7-disulfonsäure, 2-(N-Acetyl-N-methylamino)-8-hydroxynaphthalin-6-sulfonsäure, 2-Acetylamino-8-hydroxynaphthalin-6-sulfonsäure, 2-Acetylamino-8-hydroxynaphthalin-3,6-disulfonsäure, 1-Acetylamino-5-hydroxynaphthalin-7-sulfonsäure, 1-Acetylamino-8-hydroxynaphthalin-3,6- bzw. -4,6-disulfonsäure, 2-Sulfoacetylamino-5-hydroxynaphthalin-7-sulfonsäure, 2-Ureido-5-hydroxynaphthalin-7-sulfonsäure, 1-Hydroxynaphthalin-3,6-disulfonsäure, 1-Methoxy-acetylamino-8-hydroxynaphthalin-3,6-disulfonsäure, 1-Sulfoacetylamino-8-hydroxynaphthalin-3,6- oder -4,6-disulfonsäure, 1-Chloracetylamino-8-hydroxynaphthalin-3,6-disulfonsäure, 1-Acryloylamino-8-hydroxynaphthalin-3,6-disulfonsäure, 1-Propionylamino-8-hydroxynaphthalin-4,6-disulfonsäure, 1-Phenylureido-8-hydroxynaphthalin-3,6-disulfonsäure, 1-(3′-Chlorbenzoylamino)-8-hydroxynaphthalin-3,6-disulfonsäure, 1-(4′-Methylbenzoylamino)-8-hydroxynaphthalin-3,6-disulfonsäure, 1-Crotonylamino-8-hydroxynaphthalin-4,6-disulfonsäure, 1-Ureido-8-hydroxynaphthalin-4,6-disulfonsäure, 1-(2′,4′-Dichlorbenzoylamino)-8-hydroxynaphthalin-4,6-disulfonsäure, 1-Ureido-8-hydroxynaphthalin-3,6-disulfonsäure, 1-Propionylamino-8-hydroxynaphthalin-3,6-disulfonsäure, 1-(ß-Chlorpropionylamino-8-hydroxynaphthalin-3,6-disulfonsäure, 1-Crotonylamino-8-hydroxynaphthalin-3,6-disulfonsäure, 1-Chloracetylamino-8-hydroxynaphthalin-4,6-disulfonsäure, 1-(4′-Chlorbenzoylamino)-8-hydroxynaphthalin-3,6-disulfonsäure, 1-(3′-Methylbenzoylamino)-8-hydroxynaphthalin-3,6-disulfonsäure, 1-(ß-Chlorpropionylamino)-8-hydroxynaphthalin-4,6-disulfonsäure.

Die Diazotierung der Phenylendiaminsulfonsäuren erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trifluor-s-triazins mit den Phenylendiaminsulfonsäuren bzw., bei

vorangehender Kupplung, mit den Aminoazoverbindungen, erfolgen vorzugsweise in wässriger Lösung oder Suspension, bei niedrigen oder normalen Temperaturen und bei schwach saurem, neutralem bis schwach alkalischem pH-Wert. Vorteilhaft wird der bei der Kondensation frei werdende Fluorwasserstoff laufend durch Zugabe wässriger Alkalihydroxide, -carbonate oder -bicarbonate neutralisiert. Die Kondensation des 2,4,6-Trifluor-s-triazins mit der 2-Naphthylamin-1-sulfonsäure erfolgt bei pH 7 und 0°C, die anschliessende Kondensation mit der Phenylendiaminsulfonsäure bei pH 8 zwischen 0 und 20°C. Falls man von dem Aminoazofarbstoff ausgeht, kondensiert man mit dem 2,4,6-Trifluor-s-triazin bei einem pH von 6,5 bis 7 und 0°C, und die Kondensation mit der 2-Naphthylamin-1-sulfonsäure in letzter Stufe geschieht bei pH 7 und normalen Temperaturen bis etwa 30°C. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert. Als alkalische Mittel kommen z.B. Natriumhydroxid, Natriumcarbonat, Natriumhydrogencarbonat sowie die entsprechenden Kalium- oder Lithiumsalze in Betracht.

Nach der bevorzugten Ausführungsform des Verfahrens zur Herstellung der Reaktivfarbstoffe der Formel (1) werden als alkalische Mittel bei den Kondensationen oder Kupplungen bzw. zur Neutralisation des freiwerdenden Fluorwasserstoffs basische Lithiumverbindungen eingesetzt. Vorzugsweise werden beide Kondensationsschritte und gegebenenfalls auch der Kupplungsschritt in Gegenwart von mindestens der äquimolaren Menge einer basischen Lithiumverbindung ausgeführt. Die basische Lithiumverbindung wird bei den Kondensations- bzw. Kupplungsschritten jeweils in 1- bis 3-molaren, vorzugsweise 1,2- bis 1,5-molaren Mengen eingesetzt. Danach liegen die Reaktivfarbstoffe der Formel (1) in wässriger Phase, abhängig von Art und Menge der zugesetzten Salze als Lithiumsalze oder als Mischung von Lithiumsalzen mit anderen Alkalimetallsalzen, wie Natrium- oder Kaliumsalzen, vor. Sie können aus der wässrigen Lösung durch Zugabe von Natrium- oder Kaliumsalzen, z.B. Natriumchlorid, ausgesalzen werden. Ferner können die Farbstoffsalze durch Sprüh- oder Walzentrocknung aus der wässrigen Lösung direkt isoliert werden. Ausserdem können die nach dem erfindungsgemässen Verfahren anfallenden wässrigen Lösungen der Farbstoffsazle, gegebenenfalls nach Zusatz eines Puffers, vorzugsweise eines Phosphatpuffers (pH 5,5—6,5), direkt als Flüssigformulierungen eingesetzt werden. Nach dieser bevorzugten Ausführungsform des Verfahrens zur Herstellung von Reaktivfarbstoffen der Formel (1) wird die Aufarbeitung der Reaktionsprodukte erleichtert, und die Produkte fallen rein und im wesentlichen frei von störenden Nebenprodukten an.

Die Farbstoffe der Formel (1) sind faserreaktiv, da sie in dem s-Triazinrest ein abspaltbares Fluoratom enthalten. Unter faserreaktive Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) und ihre Salze eignen sich zum Färben und Bedrucken von verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und von allem Baumwolle. Sie eignen sich für das Ausziehverfahren, besonders bei höheren Temperaturen, und ebenso zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben. Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteil fördernden Mittels, zu unterwerfen.

Die Reaktivfarbstoffe der Formel (1) zeichnen sich durch hohe Reaktivität und gutes Fixiervermögen aus. Sie ergeben Färbungen mit guten Nass- und Lichtechtheiten und hoher Farbstärke und hoher Faser-Farbstoff-Bindungsstabilität, sowohl in saurem als auch in alkalischem Bereich; die Färbungen sind ätzbar.

In den nachfolgenden Beispielen ist die Herstellung der Zwischenprodukte nicht in allen Fällen beschrieben, sie ergibt sich jedoch ohne weiteres aus dem oben gesagten. Die Temperaturen sind in Celsiusgraden angegeben.

Beispiel 1: 22,3 g 2-Naphthylamin-1-sulfonsäure werden in 350 ml Wasser verrührt und mit 50 ml 2N Lithiumhydroxidlösung bei Raumtemperatur neutral gelöst. Man versetzt die Lösung mit 0,4 g Dinatriumphosphat, worauf der pH-Wert auf 8,3 steigt. Zu dieser Lösung werden bei 0° innert 10 Minuten 14,2 g 2,4,6-Trifluor-1,3,5-triazin getropft, wobei der pH-Wert mit 2N Lithiumhydroxidlösung bei 7 gehalten wird. Sobald kein Alkaliverbrauch mehr feststellbar ist, versetzt man das Reaktionsgemisch bei 0—5° und einem pH-Wert von 8,5 im Verlauf von 5—10 Minuten mit einer Lösung von 17,8 g 1,3-Diaminobenzol-4-sulfonsäure in 60 ml 2N Lithiumhydroxid. Man rührt vorerst eine Stunde bei 0—5° und lässt dann die Temperatur auf 20° ansteigen, wobei zur Neutralisation des freiwerdenden Fluorwasserstoffs noch weitere 35 ml 2N Lithiumhydroxidlösung benötigt werden. Die Reaktionslösung des sekundären Kondensationsproduktes aus 2,4,6-Trifluor-1,3,5-triazin, 2-Naphthylamin-1-sulfonsäure und 1,3-Diaminobenzol-4-sulfonsäure wird auf 0—5° gekühlt, mit 23 ml 4N Natriumnitritlösung, anschliessend mit 25 ml Salzsäure konz. versetzt und während einer Stunde diazotiert. In die Suspension der Diazoverbindung werden 39,7 g 1-Benzoylamino-8-hydroxynaphthalin-3,6-disulfonsäure gegeben und die

Kupplung durch Zutropfen von 2N Lithiumhydroxidlösung bei einem pH-Wert von 8 durchgeführt. Nach beendigter Kupplung wird der Farbstoff der Formel

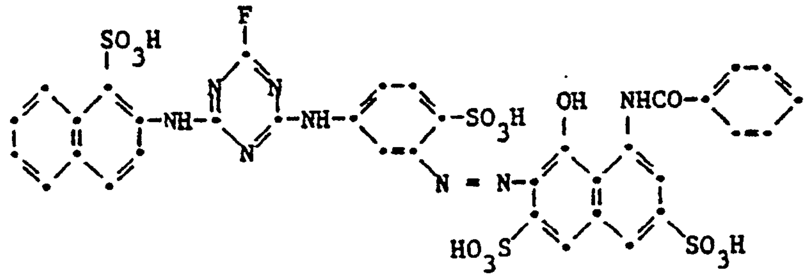

durch Zugabe von Natriumchlorid gefällt, abgesaugt, getrocknet und gemahlen. Man erhält ein dunkles Pulver, das zum Färben und Bedrucken von Baumwolle in brillanten roten Tönen nach den für Reaktivfarbstoffe üblichen Verfahren bestens geeignet ist.

Farbstoffe mit ähnlichen Eigenschaften werden erhalten, wenn man anstelle der im Beispiel 1 aufgeführten Verbindungen äquivalente Mengen der in der nachfolgenden Tabelle 1 aufgeführten Komponenten verwendet und im übrigen gemäss dem Beispiel 1 verfährt.

Der im Beispiel 1 beschriebene Farbstoff lässt sich, allerdings in nicht so einheitlicher Art und Weise, auch über das Farbstoffchromophor herstellen. Zu diesem Zweck wird der Farbstoff 1-Benzoylamino-7-(3'-amino-6'-sulfophenylazo)-8-hydroxynaphthalin-3,6-disulfonsäure (erhalten durch Diazotieren und Kuppeln von 1-Acetylamino-3-aminobenzol-4-sulfonsäure auf 1-Benzoylamino-8-hydroxynaphthalin-3,6-disulfonsäure und anschliessend partieller Verseifung der Acetylaminogruppe in saurem Medium) bei 0° und einem pH-Wert von 7 mit 2,4,6-Trifluor-1,3,5-triazin und hernach bei 20—30° mit 2-Naphthylamin-1-sulfonsäure kondensiert.

TABELLE 1

| No. | Diamin | Kupplungskomponente | Farbton |
|---|---|---|---|
| 2 | 1,3-Diaminobenzol-4-sulfonsäure | 1-Acetylamino-8-hydroxynaphthalin-3,6-disulfonsäure | rot |
| 3 | 1,3-Diaminobenzol-4-sulfonsäure | 1-Acetylamino-8-hydroxynaphthalin-4,6-disulfonsäure | rot |
| 4 | 1,3-Diaminobenzol-4-sulfonsäure | 1-Benzoylamino-8-hydroxynaphthalin-4,6-disulfonsäure | rot |
| 5 | 1,3-Diaminobenzol-4-sulfonsäure | 2-Acetylamino-5-hydroxynaphthalin-7-sulfonsäure | orange |
| 6 | 1,3-Diaminobenzol-4-sulfonsäure | 2-Sulfoacetylamino-5-hydroxynaphthalin-7-sulfonsäure | orange |
| 7 | 1,3-Diaminobenzol-4-sulfonsäure | 2-Ureido-5-hydroxynaphthalin-7-sulfonsäure | orange |
| 8 | 1,3-Diaminobenzol-4-sulfonsäure | 2-Acetylamino-8-hydroxynaphthalin-6-sulfonsäure | rot |
| 9 | 1,3-Diaminobenzol-4-sulfonsäure | 2-Hydroxynaphthalin-3,6-disulfonsäure | rotst.orange |
| 10 | 1,3-Diaminobenzol-4-sulfonsäure | 2-Hydroxynaphthalin-6,8-disulfonsäure | orange |
| 11 | 1,3-Diaminobenzol-4-sulfonsäure | 1-Hydroxynaphthalin-3,6-disulfonsaure | rotst.orange |
| 12 | 1,3-Diaminobenzol-4-sulfonsäure | 1-Hydroxynaphthalin-4,6-disulfonsäure | rotst.orange |
| 13 | 1,4-Diaminobenzol-2-sulfonsäure | 1-Acetylamino-8-hydroxynaphthalin-3,6-disulfonsäure | violett |
| 14 | 1,4-Diaminobenzol-2-sulfonsäure | 1-Benzoylamino-8-hydroxynaphthalin-3,6-disulfonsäure | violett |
| 15 | 1,4-Diaminobenzol-2-sulfonsäure | 1-Acetylamino-8-hydroxynaphthalin-4,6-disulfonsäure | blaust.rot |
| 16 | 1,4-Diaminobenzol-2-sulfonsäure | 2-Acetylamino-5-hydroxynaphthalin-7-disulfonsäure | scharlach |
| 17 | 1,4-Diaminobenzol-2-sulfonsäure | 2-Sulfoacetylamino-5-hydroxynaphthalin-7-sulfonsäure | scharlach |
| 18 | 1,4-Diaminobenzol-2-sulfonsäure | 2-Acetylamino-8-hydroxynaphthalin-6-sulfonsäure | blaust.rot |
| 19 | 1,4-Diaminobenzol-2-sulfonsäure | 1-Acetylamino-5-hydroxynaphthalin-7-sulfonsäure | rot |
| 20 | 1,4-Diaminobenzol-2-sulfonsäure | 2-Hydroxynaphthalin-3,6-disulfonsäure | blaust.rot |
| 21 | 1,4-Diaminobenzol-2-sulfonsäure | 2-Hydroxynaphthalin-6,8-disulfonsäure | rot |

TABELLE 1 (Fortsetzung)

| No. | Diamin | Kupplungskomponente | Farbton |
|---|---|---|---|
| 22 | 1,4-Diaminobenzol-2-sulfonsäure | 1-Hydroxynaphthalin-3,6-disulfonsäure | rot |
| 23 | 1,4-Diaminobenzol-2-sulfonsäure | 1-Hydroxy-7-(3'-sulfophenylamino)-naphthalin-3-sulfonsäure | braun |
| 24 | 1,3-Diaminobenzol-4-sulfonsäure | 1-Sulfoacetylamino-8-hydroxynaphthalin-3,6-disulfonsäure | rot |
| 25 | 1,3-Diaminobenzol-4-sulfonsäure | 1-Ureido-8-hydroxynaphthalin-3,6-disulfonsäure | rot |
| 26 | 1,3-Diaminobenzol-4-sulfonsäure | 1-Propionylamino-8-hydroxynaphthalin-3,6-disulfonsäure | rot |
| 27 | 1,3-Diaminobenzol-4-sulfonsäure | 1-(ß-Chlorpropionylamino)-8-hydroxynaphthalin-3,6-disulfonsäure | rot |
| 28 | 1,3-Diaminobenzol-4-sulfonsäure | 1-Chloracetylamino-8-hydroxynaphthalin-3,6-disulfonsäure | rot |
| 29 | 1,3-Diaminobenzol-4-sulfonsäure | 1-Crotonylamino-8-hydroxynaphthalin-3,6-disulfonsäure | rot |
| 30 | 1,3-Diaminobenzol-4-sulfonsäure | 1-Sulfoacetylamino-8-hydroxynaphthalin-4,6-disulfonsäure | rot |
| 31 | 1,3-Diaminobenzol-4-sulfonsäure | 1-Ureido-8-hydroxynaphthalin-4,6-disulfonsäure | rot |
| 32 | 1,3-Diaminobenzol-4-sulfonsäure | 1-Chloracetylamino-8-hydroxynaphthalin-4,6-disulfonsäure | rot |
| 33 | 1,3-Diaminobenzol-4,6-disulfonsäure | 2-Acetylamino-5-hydroxynaphthalin-7-sulfonsäure | orange |
| 34 | 1,3-Diaminobenzol-4,6-disulfonsäure | 2-Ureido-5-hydroxynaphthalin-7-sulfonsäure | orange |
| 35 | 1,3-Diaminobenzol-4,6-disulfonsäure | 2-Acetylamino-8-hydroxynaphthalin-6-sulfonsäure | rot |
| 36 | 1,3-Diaminobenzol-4,6-disulfonsäure | 1-Acetylamino-8-hydroxynaphthalin-3,6-disulfonsäure | rot |
| 37 | 1,3-Diaminobenzol-4,6-disulfonsäure | 1-Benzoylamino-8-hydroxynaphthalin-3,6-disulfonsäure | rot |
| 38 | 1,3-Diaminobenzol-4,6-disulfonsäure | 1-Ureido-8-hydroxynaphthalin-3,6-disulfonsäure | rot |
| 39 | 1,3-Diaminobenzol-4,6-disulfonsäure | 1-Sulfoacetylamino-8-hydroxynaphthalin-3,6-disulfonsäure | rot |
| 40 | 1,3-Diaminobenzol-4,6-disulfonsäure | 1-Methoxyacetylamino-8-hydroxynaphthalin-3,6-disulfonsäure | rot |
| 41 | 1,3-Diaminobenzol-4,6-disulfonsäure | 1-(4'-Chlorbenzoylamino)-8-hydroxynaphthalin-3,6-disulfonsäure | rot |

TABELLE 1 (Fortsetzung)

| No. | Diamin | Kupplungskomponente | Farbton |
|---|---|---|---|
| 42 | 1,3-Diaminobenzol-4,6-disulfonsäure | 1-(3'-Methylbenzoylamino)-8-hydroxynaphthalin-3,6-disulfonsäure | rot |
| 43 | 1,3-Diaminobenzol-4,6-disulfonsäure | 1-Acetylamino-8-hydroxynaphthalin-4,6-disulfonsäure | rot |
| 44 | 1,3-Diaminobenzol-4,6-disulfonsäure | 1-Benzoylamino-8-hydroxynaphthalin-4,6-disulfonsäure | rot |
| 45 | 1,3-Diaminobenzol-4,6-disulfonsäure | 1-(ß-Chlorpropionylamino)-8-hydroxynaphthalin-4,6-disulfonsäure | rot |
| 46 | 1,3-Diaminobenzol-4,6-disulfonsäure | 1-Ureido-8-hydroxynaphthalin-4,6-disulfonsäure | rot |
| 47 | 1,3-Diaminobenzol-4,6-disulfonsäure | 2-Hydroxynaphthalin-3,6-disulfonsäure | rotst.orange |
| 48 | 1,3-Diaminobenzol-4,6-disulfonsäure | 2-Hydroxynaphthalin-6,8-disulfonsäure | orange |
| 49 | 1,3-Diaminobenzol-4,6-disulfonsäure | 1-Hydroxynaphthalin-3,6-disulfonsäure | rotst.orange |
| 50 | 1,3-Diaminobenzol-4,6-disulfonsäure | 1-Hydroxynaphthalin-4,6-disulfonsäure | rotst.orange |
| 51 | 1,4-Diaminobenzol-2-sulfonsäure | 1-Methoxyacetylamino-8-hydroxynaphthalin-3,6-disulfonsäure | violett |
| 52 | 1,4-Diaminobenzol-2-sulfonsäure | 1-Sulfoacetylamino-8-hydroxynaphthalin-3,6-disulfonsäure | violett |
| 53 | 1,4-Diaminobenzol-2-sulfonsäure | 1-Chloracetylamino-8-hydroxynaphthalin-3,6-disulfonsäure | violett |
| 54 | 1,4-Diaminobenzol-2-sulfonsäure | 1-Acryloylamino-8-hydroxynaphthalin-3,6-disulfonsäure | violett |
| 55 | 1,4-Diaminobenzol-2-sulfonsäure | 1-Sulfoacetylamino-8-hydroxynaphthalin-4,6-disulfonsäure | blaust.rot |
| 56 | 1,4-Diaminobenzol-2-sulfonsäure | 1-Propionylamino-8-hydroxynaphthalin-4,6-disulfonsäure | blaust.rot |
| 57 | 1,4-Diaminobenzol-2,6-disulfonsäure | 1-Acetylamino-8-hydroxynaphthalin-3,6-disulfonsäure | violett |
| 58 | 1,4-Diaminobenzol-2,6-disulfonsäure | 1-Benzoylamino-8-hydroxynaphthalin-3,6-disulfonsäure | violett |
| 59 | 1,4-Diaminobenzol-2,6-disulfonsäure | 1-Sulfoacetylamino-8-hydroxynaphthalin-3,6-disulfonsäure | violett |
| 60 | 1,4-Diaminobenzol-2,6-disulfonsäure | 1-Phenylureido-8-hydroxynaphthalin-3,6-disulfonsäure | violett |
| 61 | 1,4-Diaminobenzol-2,6-disulfonsäure | 1-(3'-Chlorbenzoylamino)-8-hydroxynaphthalin-3,6-disulfonsäure | violett |

TABELLE 1 (Fortsetzung)

| No. | Diamin | Kupplungskomponente | Farbton |
|---|---|---|---|
| 62 | 1,4-Diaminobenzol-2,6-disulfonsäure | 1-(4'-Methylbenzoylamino)-8-hydroxynaphthalin-3,6-disulfonsäure | violett |
| 63 | 1,4-Diaminobenzol-2,6-disulfonsäure | 1-Acetylamino-8-hydroxynaphthalin-4,6-disulfonsäure | blaust.rot |
| 64 | 1,4-Diaminobenzol-2,6-disulfonsäure | 1-Benzoylamino-8-hydroxynaphthalin-4,6-disulfonsäure | blaust.rot |
| 65 | 1,4-Diaminobenzol-2,6-disulfonsäure | 1-Crotonylamino-8-hydroxynaphthalin-4,6-disulfonsäure | blaust.rot |
| 66 | 1,4-Diaminobenzol-2,6-disulfonsäure | 1-Ureido-8-hydroxynaphthalin-4,6-disulfonsäure | blaust.rot |
| 67 | 1,4-Diaminobenzol-2,6-disulfonsäure | 1-(2',4'-Dichlorbenzoylamino)-8-hydroxynaphthalin-4,6-disulfonsäure | blaust.rot |
| 68 | 1,4-Diaminobenzol-2,6-disulfonsäure | 2-Hydroxynaphthalin-3,6-disulfonsäure | blaust.rot |
| 69 | 1,4-Diaminobenzol-2,6-disulfonsäure | 1-Hydroxynaphthalin-3,6-disulfonsäure | rot |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nicht-ionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nicht-ionogenen Waschmittel kochend geseift, nochmals gespült und getrocknet.

Färbevorschrift III

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxid und 20 g kalziniert Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstund mit einem nicht-ionogenen Waschmittel kochend geseift, nochmals gespült und getrocknet.

Färbevorschrift IV

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxid und 0,1 Liter Wasserglas enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nicht-ionogenen Waschmittel kochend geseift, nochmals gespült und getrocknet.

Färbevorschrift V

2 Teile des gemäss Beispiel 1 erhaltenen Reaktivfarbstoffes werden unter Zusatz von 0,5 Teilen m-nitrobenzolsulfonsaurem Natrium in 100 Teilen gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxid und 300 g Natriumchlorid enthält, quetscht auf 75% Gewichtzunahme ab, dämpft die Färbung während 30 Sekunden bei 100 bis 102°C, seift während einer Viertelstunde in einer 0,3%-igen kochenden Lösung eines nicht-ionogenen Waschmittels, spült und trocknet.

Druckvorschrift

3 Teile des gemäss Beispiel 1 erhaltenen Reaktivfarbstoffes werden unter schnellem Rühren in 100 Teilen einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

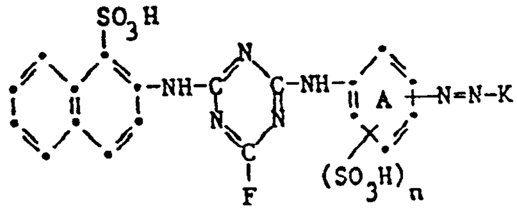

(1),

worin K der Rest einer Naphtholsulfonsäure oder N-acylierten Aminonaphtholsulfonsäure und n = 1 oder 2 ist, und der Benzolring A gegebenenfalls weitersubstituiert ist.

2. Reaktivfarbstoffe gemäss Anspruch 1, worin K der Rest einer Hydroxynaphthalindisulfonsäure oder N-acylierten Aminohydroxynaphthalin-mono- oder -disulfonsäure ist.

3. Reaktivfarbstoffe gemäss Anspruch 2, worin K der Rest einer N-acylierten 1-Amino-8-hydroxynaphthalin-3,6- oder -4,6-disulfonsäure ist.

4. Reaktivfarbstoffe gemäss Anspruch 3, worin n = 1 ist, und der Benzolring A nicht weitersubstituiert ist.

5. Der Reaktivfarbstoff gemäss Anspruch 4, der Formel

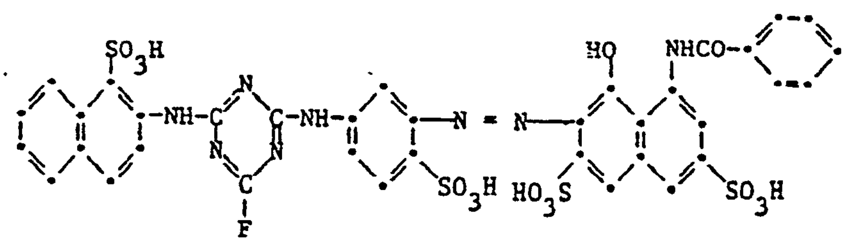

(2).

6. Reaktivfarbstoffe gemäss einem der Ansprüche 1 bis 5, als Lithiumsalze oder als Mischungen von Lithiumsalzen mit anderen Alkalimetallsalzen, insbesondere Natrium oder Kaliumsalzen.

7. Verfahren zur Herstellung von Reaktivfarbstoffen gemäss Anspruch 1, dadurch gekennzeichnet, dass man 2-Naphthylamin-1-sulfonsäure, 2,4,6-Trifluor-s-triazin, eine Phenylendiaminsulfonsäure und eine Kupplungskomponente der Naphtholsulfonsäure- oder N-acylierten Aminonaphtholsulfonsäure-Reihe in geeigneter Reihenfolge diazotiert, kuppelt und kondensiert.

8. Verfahren gemäss Anspruch 7, dadurch gekennzeichnet, dass man die Kondensationen und gegebenenfalls die Kupplung in Gegenwart von mindestens der äquimolaren Menge einer basischen Lithiumverbindung durchführt.

9. Verfahren gemäss Anspruch 8, dadurch gekennzeichnet, dass man als basische Lithiumverbindungen Lithiumcarbonat, Lithiumhydrogencarbonat oder Lithiumhydroxid verwendet.

10. Verfahren gemäss Anspruch 9, zur Herstellung des Reaktivfarbstoffes der Formel (2), dadurch gekennzeichnet, dass man 2-Naphthylamin-1-sulfonsäure in Gegenwart von Lithiumhydroxid mit 2,4,6-Trifluor-s-triazin kondensiert, das Kondensationsprodukt in Gegenwart von Lithiumhydroxid mit 1,3-Diaminobenzol-4-sulfonsäure kondensiert, das erhaltene sekundäre Kondensationsprodukt diazotiert und in Gegenwart von Lithiumhydroxid oder Natriumhydroxid mit 1-Benzoylamino-8-hydroxynaphthalin-3,6-disulfonsäure kuppelt.

11. Verwendung der Reaktivfarbstoffe oder ihrer Salze gemäss einem der Ansprüche 1 bis 6 oder der gemäss einem der Ansprüche 7 bis 10 erhaltenen Reaktivfarbstoffe bzw. ihrer Salze, zum Färben oder Bedrucken von cellulosehaltigen Fasermaterialien.

12. Verwendung gemäss Anspruch 11, zum Färben oder Bedrucken von Baumwolle.

**Revendications**

1. Colorants réactifs de formule:

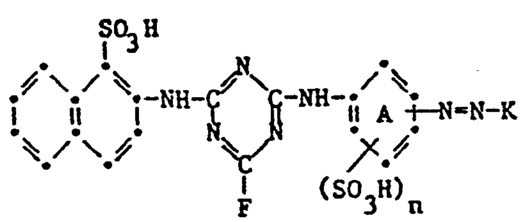

(1),

dans laquelle K est le résidu d'un acide hydroxynaphtalènesulfonique ou d'un acide aminonaphtalènesulfonique acylé à l'azote, et n = 1 ou 2, et le noyau benzénique A porte éventuellement d'autres substituants.

2. Colorant réactif conforme à la revendication 1, dans lequel K est le résidu d'un acide hydroxynaphtalènedisulfonique ou d'un acide aminohydroxynaphtalène monosulfonique ou disulfonique, acylé à l'azote.

3. Colorant réactif conforme à la revendication 2, dans lequel K est le résidu d'un acide 1-amino-8-hydroxynaphtalène-3,6- ou -4,6-disulfonique acylé à l'azote.

4. Colorant réactif conforme à la revendication 3, dans lequel n = 1, et le noyau benzénique A ne porte pas d'autre substituants.

5. Le colorant réactif conforme à la revendication 2, de formule:

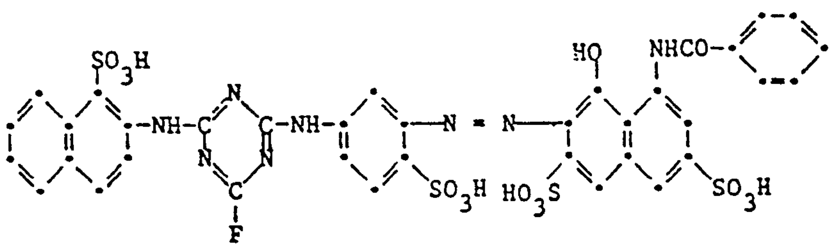

(2).

6. Colorants réactifs conformes à l'une des revendications 1 à 5, sous la forme de sels de lithium ou sous la forme de mélange de sels de lithium avec d'autres sels de métaux alcalins, en particulier des sels de sodium ou de potassium.

7. Procédé de préparation des colorants réactifs conformes à la revendication 1, caractérisé en ce que l'on effectue, dans l'ordre approprié, la diazotation, la copulation et la condensation de l'acide 2-aminonaphtalène-1-sulfonique, de la 2,4,6-trifluoro-s-triazine, d'un acide diaminobenzènesulfonique, et d'un composant de copulation de la série de l'acide hydroxynaphtalènesulfonique ou de l'acide aminohydroxynaphtalènesulfonique acylé à l'azote.

8. Procédé conforme à la revendication 7, caractérisé en ce que l'on réalise les condensations, et éventuellement la copulation, en présence d'au moins la quantité équimolaire d'un composé basique du lithium.

9. Procédé conforme à la revendication 8, caractérisé en ce que l'on utilise, en tant que composé basique du lithium, du carbonate de lithium, de l'hydrogénocarbonate de lithium, ou de l'hydroxyde de lithium.

10. Procédé conforme à la revendication 9, pour la préparation du colorant réactif de formule (2), caractérisé en ce que l'on condense l'acide 2-aminonaphtalène-1-sulfonique, en présence d'hydroxyde de lithium, avec la 2,4,6-trifluoro-s-triazine, on condense le produit de condensation, en présence d'hydroxyde de lithium, avec l'acide 1,3-diaminobenzène-4-sulfonique, on diazote le produit secondaire de condensation obtenu, et on le copule, en présence d'hydroxyde de lithium ou d'hydroxyde de sodium, avec l'acide 1-benzoylamino-8-hydroxynaphtalène-3,6-disulfonique.

11. Utilisation des colorants réactifs conformes à l'une des revendications 1 à 6 ou de leurs sels, ou des colorants réactifs obtenus selon l'une des revendications 7 à 10 ou de leurs sels, pour la teinture ou l'impression de matériaux fibreux contenant de la cellulose.

12. Utilisation conforme à la revendication 11, pour la teinture ou l'impression du coton.

**Claims**

1. A reactive dye of the formula

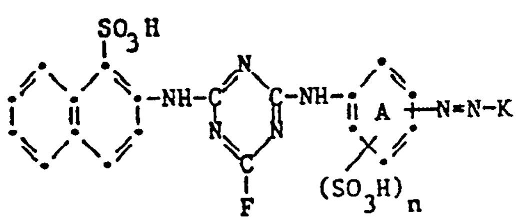

(1),

wherein K is the radical of a naphtholsulfonic acid or N-acylated aminonaphtholsulfonic acid, n is 1 or 2, and the benzene ring A may contain further substituents.

2. A reactive dye according to claim 1, wherein K is the radical of a hydroxynaphthalenedisulfonic acid or of a N-acylated aminohydroxynaphthalene-mono- or -disulfonic acid.

3. A reactive dye according to claim 2, wherein K is the radical of an N-acylated 1-amino-8-hydroxynaphthalene-3,6- or -4,6-disulfonic acid.

4. A reactive dye according to claim 3, wherein n is 1 and the benzene ring A does not contain further substituents.

5. The reactive dye according to claim 4 of the formula

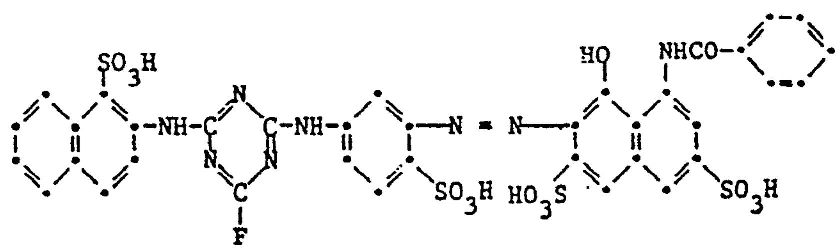

(2).

6. A reactive dye according to any one of claims 1 to 5, as a lithium salt or a mixture of a lithium salt with another alkali metal salt, in particular a sodium or potassium salt.

7. A process for the preparation of a reactive dye according to claim 1, which comprises diazotising, coupling and condensing, in suitable order, 2-naphthylamine-1-sulfonic acid, 2,4,6-trifluoro-s-triazine, a phenylenediaminesulfonic acid and a coupling component of the naphtholsulfonic acid or N-acylated aminonaphtholsulfonic acid series.

8. A process according to claim 7, wherein the condensation reactions and, if desired, the coupling, are carried out in the presence of at least the equimolar amount of a basic lithium compound.

9. A process according to claim 8, wherein the lithium compound is lithium carbonate, lithium hydrogen carbonate or lithium hydroxide.

10. A process according to claim 9 for the preparation of a reactive dye of the formula (2), which comprises condensing 2-naphthylamine-1-sulfonic acid with 2,4,6-trifluoro-s-triazine in the presence of lithium hydroxide, condensing the primary condensation product with 1,3-diaminobenzene-4-sulfonic acid in the presence of lithium hydroxide, diazotising the resultant secondary condensation product, and coupling to 1-benzoylamino-8-hydroxynaphthalene-3,6-disulfonic acid in the presence of lithium hydroxide or sodium hydroxide.

11. A process for dyeing or printing cellulosic fibre material which comprises the use of a reactive dye, or a salt thereof, as claimed in any one of claims 1 to 6 or obtained according to any one of claims 7 to 10.

12. A process according to claim 11 for dyeing or printing cotton.